(19) Europäisches Patentamt
European Patent Office
Office européen des brevets

(11) **EP 4 155 808 A1**

## (12) EUROPEAN PATENT APPLICATION
published in accordance with Art. 153(4) EPC

(43) Date of publication:
**29.03.2023 Bulletin 2023/13**

(21) Application number: **21808215.4**

(22) Date of filing: **25.04.2021**

(51) International Patent Classification (IPC):
**G02B 27/00** (2006.01)

(52) Cooperative Patent Classification (CPC):
**G02B 27/00; G02B 30/29**

(86) International application number:
**PCT/CN2021/089532**

(87) International publication number:
**WO 2021/233071 (25.11.2021 Gazette 2021/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.05.2020 CN 202010439819**

(71) Applicants:
• **Beijing Ivisual 3D Technology Co., Ltd.
Beijing 100055 (CN)**

• **Visiotech Ventures Pte. Ltd.
Singapore 188979 (SG)**

(72) Inventors:
• **DIAO, Honghao
Beijing 100055 (CN)**
• **HUANG, Lingxi
Singapore 188979 (SG)**

(74) Representative: **Zacco GmbH
Bayerstrasse 83
80335 München (DE)**

(54) **LENS, GRATING, DISPLAY PANEL, AND DISPLAY**

(57) The present application relates to the technical field of optics, and discloses a lens (100), having a non-circular-arc lens curved-surface (110), wherein a curve (130) of the lens curved-surface (110) formed on a cross section of the lens (100) has a shape determined based on a lens refractive index of the lens (100). By adopting the lens (100) disclosed by the present application, the shape of the lens curved-surface (110) can be flexibly determined according to characteristics of the lens (100) in an aspect of display, so that the shape of the lens curved-surface (110) is no longer fixed and single, and is related to the characteristics of the lens (100) in the aspect of display, thereby contributing to improvement of a display effect. The present application further discloses a grating, a display panel and a display.

Fig. 1A

**Description**

The present application claims priority to the Chinese Patent Application with an application number of 202010439819.3 and a title of "Lens, Grating, Display Panel and Display", filed to China National Intellectual Property Administration on May, 22nd, 2020, the disclosures of which are hereby incorporated by reference.

TECHNICAL FIELD

The present application relates to the technical field of optics, and for example, relates to a lens, a grating, a display panel and a display.

BACKGROUND

At present, a lens applied to the field of optics usually has a circular-arc-shaped lens curved-surface.
In a process of implementing embodiments of the present disclosure, at least the following problems are found in related technologies:
The shape of the lens curved-surface is fixed and single, and is not conducive to improvement of a display effect.

SUMMARY

In order to provide a basic understanding of some aspects of the disclosed embodiments, a brief summary is given below. The summary is not intended to be a general comment, nor to identify key/important components or describe the scope of protection of the embodiments, but to be a preface to the following detailed description.
Embodiments of the present disclosure provide a lens, a grating, a display panel and a display, to solve a technical problem that a shape of a lens curved-surface is fixed and single and is not conducive to improvement of a display effect.
The lens provided by embodiments of the present disclosure has a non-circular-arc lens curved-surface,
wherein a curve of the lens curved-surface formed on a cross section of the lens by has a shape determined based on a lens refractive index of the lens.
In some embodiments, the shape of the curve may be determined based on a variance between the lens refractive index and a medium refractive index. Optionally, the medium refractive index may be a refractive index of a medium outside the lens.
In some embodiments, the medium refractive index may be the refractive index of a medium between the lens and a pixel for display.
In some embodiments, the curve may be a hyperbola, ellipse or parabola.
In some embodiments, the curve may be the hyperbola, satisfying the following conditions:

$$\frac{y^2}{b^2} - \frac{x^2}{a^2} = 1; \qquad a > 0, b > 0$$

wherein x is a coordinate of a point on the hyperbola on an X axis; y is a coordinate of a point on the hyperbola on a Y axis; a is a real semi-axis length of the hyperbola; b is an imaginary semi-axis length of the hyperbola; and a and b are determined by the variance between the lens refractive index and the medium refractive index.
In some embodiments, a and b may satisfy the following condition:

$$\frac{a}{b} = \frac{\sqrt{n_l^2 - n_m^2}}{n_m}$$

wherein $n_l$ is the lens refractive index; and $n_m$ is the medium refractive index.
In some embodiments, the curve may be the ellipse, satisfying the following conditions:

$$\frac{x^2}{a^2} + \frac{y^2}{b^2} = 1; \qquad a > b > 0$$

wherein x is a coordinate of a point on the ellipse on the X axis; y is a coordinate of a point on the ellipse on the Y axis; a is a major semi-axis length of the ellipse; b is a minor semi-axis length of the ellipse; and a and b are determined by the variance between the lens refractive index and the medium refractive index.
In some embodiments, a and b may satisfy the following condition:

$$\frac{a}{b} = \frac{\sqrt{n_l^2 - n_m^2}}{n_l}$$

wherein $n_l$ is the lens refractive index; and $n_m$ is the medium refractive index.
In some embodiments, the following condition may be satisfied: $n_l > n_m$.
In some embodiments, the lens may be a lenticular lens or a spherical lens.
The grating provided by embodiments of the present disclosure comprises the lens, and further comprises a substrate for bearing the lens.
In some embodiments, part or all of a plurality of lenses may be in array arrangement.
In some embodiments, the plurality of lenses and the substrate may be relatively independent structures. Optionally, the plurality of lenses and the substrate may be integrally formed.
In some embodiments, the substrate may comprise a light-transmissive material.
The display panel provided by embodiments of the present disclosure comprises the grating.

In some embodiments, the display panel may further comprise a pixel for display.

In some embodiments, the pixel may comprise a plurality of composite subpixels; and each composite subpixel of the plurality of composite subpixels may comprise a plurality of subpixels. Optionally, the grating may comprise a plurality of spherical lenses serving as lenses; and at least one spherical lens of the plurality of spherical lenses may cover at least one composite subpixel of the same color.

In some embodiments, each spherical lens in the plurality of spherical lenses may respectively cover a composite subpixel of the same color.

In some embodiments, when the curve of the lens curved-surface formed on the cross section of the lens is the hyperbola, the lens curved-surface may face the pixel. Optionally, when the curve of the lens curved-surface formed on the cross section of the lens is the ellipse, the lens curved-surface may face away from the pixel.

In some embodiments, the pixel may be a pixel for 3D display.

The display provided by embodiments of the present disclosure comprises the display panel.

The lens, the grating, the display panel and the display provided by the embodiments of the present disclosure may achieve the following technical effects:
The shape of the lens curved-surface can be flexibly determined according to characteristics of the lens in an aspect of display, so that the shape of the lens curved-surface is no longer fixed and single, and is related to the characteristics of the lens in the aspect of display, thereby contributing to improvement of display effect.

The above general description and the following description are exemplary and explanatory only, and are not intended to limit the present application.

DESCRIPTION OF DRAWINGS

One or more embodiments are illustrated by the corresponding drawings, and the illustrations and drawings do not limit the embodiments. Elements having the same reference numerals in the drawings are shown as similar elements, and the drawings are not intended to limit the scale, wherein:

Figs. 1A and 1B are structural schematic diagrams of a lens provided by embodiments of the present disclosure;
Fig. 2 is a schematic diagram of a principle of determining a shape of a curve of the lens provided by embodiments of the present disclosure;
Fig. 3 is a schematic diagram of another principle of determining the shape of the curve of the lens provided by embodiments of the present disclosure;
Figs. 4A and 4B are respectively another structural schematic diagrams of the lens provided by embodiments of the present disclosure;

Fig. 5 is a structural schematic diagram of a grating provided by embodiments of the present disclosure;
Figs. 6A and 6B are another structural schematic diagrams of the grating provided by embodiments of the present disclosure.
Fig. 7 is a structural schematic diagram of a substrate provided by embodiments of the present disclosure;
Fig. 8 is a structural schematic diagram of a display panel provided by embodiments of the present disclosure;
Fig. 9 is another structural schematic diagram of the display panel provided by embodiments of the present disclosure;
Fig. 10A is a structural schematic diagram of a pixel provided by embodiments of the present disclosure;
Figs. 10B and 10C are respectively schematic diagrams of a coverage relationship between a spherical lens and a composite subpixel provided by embodiments of the present disclosure;
Fig. 11 is schematic diagram of another coverage relationship between the spherical lens and the composite subpixel provided by embodiments of the present disclosure;
Figs. 12A and 12B are respectively schematic diagrams of an orientation relationship between a lens curved-surface and the pixel provided by embodiments of the present disclosure; and
Fig. 13 is a structural schematic diagram of a display provided by embodiments of the present disclosure.

Reference numerals:

100: lens; 101: lenticular lens; 102: spherical lens; 1021: spherical lens; 1022: spherical lens; 1023: spherical lens; 110: lens curved-surface; 120: lens bottom surface; 130: curve; 1301: curve; 13011: curve; 1302: curve; 13021: curve; 1303: curve; 13031: curve; 1304: curve; 1305: curve; 1306: curve; 1307: curve; 200: medium; 300: pixel; 310: composite subpixel; 311: subpixel; 320: composite subpixel; 321: subpixel; 330: composite subpixel; 331: subpixel; 500: grating; 510: substrate; 600: light-transmissive material; 700: display panel; 800: display; A: projection line; B: projection line; C: projection line; D: axis; E: projection line; F: projection line; L: angle; M: angle; N: angle; R: center of a circle; X: region; Y: region; and Z: region.

DETAILED DESCRIPTION

To understand features and technical contents of embodiments of the present disclosure in more detail, implementation of the embodiments of the present disclosure is described in detail below with reference to accompanying drawings; and the accompanying drawings are used for reference only, rather than limiting the embodiments of the present disclosure. In following technical description, for the convenience of explanation, a thorough understanding of the disclosed embodiments is provided through more details. However, one or more embodiments may be implemented without the details. In other cases, to simplify the accompanying drawings, well-known structures and apparatuses may be shown simplistically.

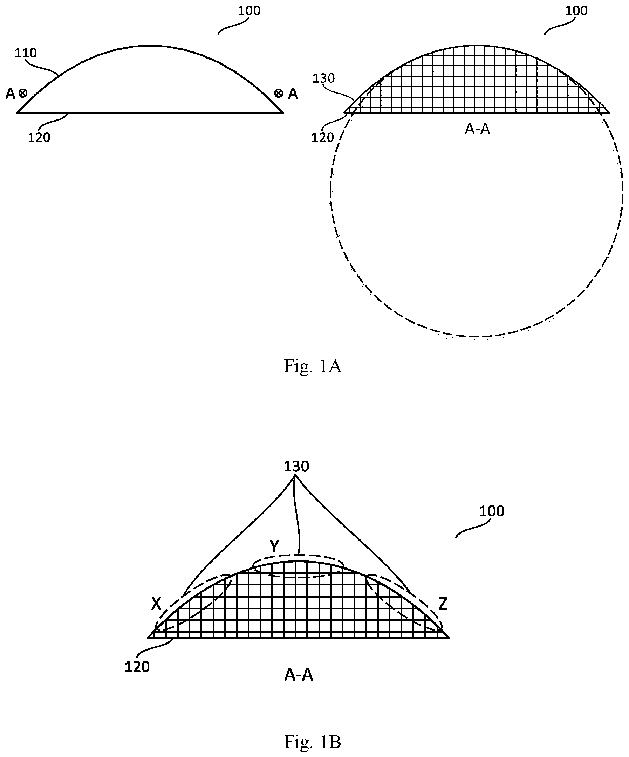

Referring to Figs. 1A and 1B, embodiments of the present disclosure provide a lens 100.

In some embodiments, as shown in Fig. 1A, the lens 100 has a non-circular-arc lens curved-surface 110, wherein a curve 130 of the lens curved-surface 110 formed on an A-A cross section of the lens 100 in an A-A direction within paper has a shape determined based on a lens refractive index of the lens 100.

In some embodiments, the lens 100 further comprises a lens bottom surface 120. Optionally, the lens bottom surface 120 is bonded with the lens curved-surface 110 to form a solid of the lens 100.

In some embodiments, the lens refractive index of a to-be-manufactured lens 100 may be acquired when the lens 100 with the non-circular-arc curved surface 110 is manufactured; and the shape of the curve 130 of the lens curved-surface 110 formed on the cross section of the lens 100 is determined based on the lens refractive index.

In some embodiments, as shown in Fig. 1B, the curve 130, of which the shape is determined based on the lens refractive index of the lens 100, may be all of the curve 130 of the lens curved-surface 110 formed on the cross section of the lens 100. Optionally, the curve 130, of which the shape is determined based on the lens refractive index of the lens 100, may be a part of the curve 130 of the lens curved-surface 110 formed on the cross section of the lens 100, for example, including a curve 130 in at least one of a region X, a region Y and a region Z represented by dotted lines. In this way, length and position of the curve 130, of which the shape is determined based on the lens refractive index of the lens 100, may be flexibly set.

In some embodiments, the shape of the curve 130 of the lens curved-surface 110 formed on the cross section of the lens 100 may be determined according to actual conditions such as process requirements, and the length, position and the like of the curve 130 may be determined based on the lens refractive index of the lens 100, as long as the shape of the lens curved-surface 110 can be flexibly determined according to the characteristics of the lens 100 in an aspect of display to facilitate improvement of display effect.

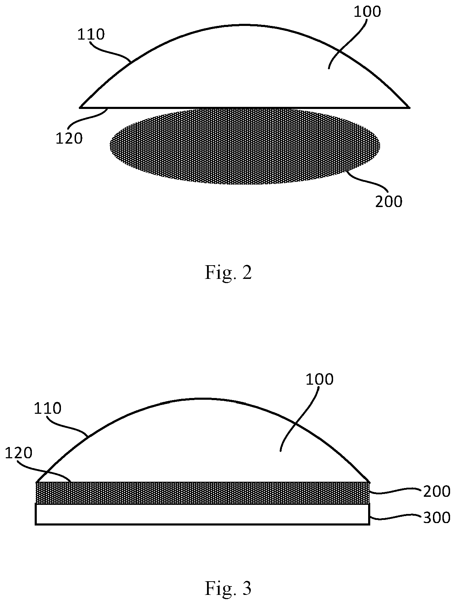

In some embodiments, the shape of the curve 130 may be determined based on a variance between the lens refractive index and a medium refractive index. As shown in Fig. 2, the medium refractive index may be a refractive index of a medium 200 located outside the lens 100.

In some embodiments, as shown in Fig. 2, the medium 200 may be located below the lens 100. Optionally, the medium 200 may be located above the lens 100, or at a side or other positions of the lens 100.

In some embodiments, more than two medium refractive indexes may be present outside the lens 100. A reason for the case may be that more than two media 200 with different medium refractive indexes are located outside the lens 100, or different parts of the same medium 200 outside the lens 100 have more than two medium refractive indexes. In this case, one medium refractive index may be selected to determine the shape of the curve 130 of the lens curved-surface 110 formed on the cross section of the lens 100. Optionally, an average value of part or all of the medium refractive indexes may be obtained; and the average value is used to determine the shape of the curve 130 of the lens curved-surface 110 formed on the cross section of the lens 100.

In some embodiments, the medium refractive index outside the lens 100 may be selected or determined according to actual conditions such as process requirements, and the shape of the curve 130 of the lens curved-surface 110 formed on the cross section of the lens 100 may be determined accordingly, as long as the shape of the lens curved-surface 110 can be flexibly determined according to the characteristics of the lens 100 in the aspect of display to facilitate the improvement of display effect.

Referring to Fig. 3, in some embodiments, the medium refractive index may be the refractive index of a medium 200 between the lens 100 and a pixel 300 for display.

In some embodiments, more than two medium refractive indexes may be present between the lens 100 and the pixel 300. A reason for the case may be that more than two media 200 with different medium refractive indexes are located between the lens 100 and the pixel 300, or different parts of the same medium 200 between the lens 100 and the pixel 300 have more than two medium refractive indexes. In this case, one medium refractive index may be selected to determine the shape of the curve 130 of the lens curved-surface 110 formed on the cross section of the lens 100. Optionally, an average value of part or all of the medium refractive indexes may be obtained; and the average value is used to determine the shape of the curve 130 of the lens curved-surface 110 formed on the cross section of the lens 100.

In some embodiments, the medium refractive index between the lens 100 and the pixel 300 may be selected or determined according to actual conditions such as process requirements, and the shape of the curve 130 of the lens curved-surface 110 formed on the cross section of the lens 100 may be determined accordingly, as long as the shape of the lens curved-surface 110 can be flexibly determined according to the characteristics of the lens 100 in the aspect of display to facilitate the improvement of display effect.

In some embodiments, the curve 130 may be a hyperbola, ellipse or parabola. In some embodiments, the curve 130 may be a hyperbola, ellipse or parabola. Optionally, the shape of the curve 130 may be determined according to actual conditions such as process requirements, for example, a hyperbola, ellipse, parabola or the like, as long as the shape of the lens curved-surface 110 can be flexibly determined according to the characteristics of the lens 100 in the aspect of display to facilitate the improvement of display effect.

In some embodiments, the curve 130 may be the hyperbola, satisfying the following conditions:

$$\frac{y^2}{b^2} - \frac{x^2}{a^2} = 1; \qquad a > 0, b > 0$$

wherein x is a coordinate of a point on the hyperbola on an X axis; y is a coordinate of a point on the hyperbola on a Y axis; $a$ is a real semi-axis length of the hyperbola; b is an imaginary semi-axis length of the hyperbola; and $a$ and b are determined by the variance between the lens refractive index and the medium refractive index.

In some embodiments, the conditions satisfied when the curve 130 is the hyperbola may be set according to actual conditions such as process requirements; and the conditions may be different from the above formula, as long as the hyperbola shape of the curve 130 on the lens curved-surface 110 can be flexibly determined according to the characteristics of the lens 100 in the aspect of display to facilitate the improvement of display effect.

In some embodiments, $a$ and b may satisfy the following condition:

$$\frac{a}{b} = \frac{\sqrt{n_l^2 - n_m^2}}{n_m}$$

wherein $n_l$ is the lens refractive index; and $n_m$ is the medium refractive index.

In some embodiments, the conditions satisfied by $a$ and b may be set according to actual conditions such as process requirements; and the conditions may be different from the above formula, as long as the hyperbola shape of the curve 130 on the lens curved-surface 110 can be flexibly determined according to the characteristics of the lens 100 in the aspect of display to facilitate the improvement of display effect.

In some embodiments, the curve 130 may be the ellipse, satisfying the following conditions:

$$\frac{x^2}{a^2} + \frac{y^2}{b^2} = 1; \qquad a > b > 0$$

wherein x is a coordinate of a point on the ellipse on the X axis; y is a coordinate of a point on the ellipse on the Y axis; $a$ is a major semi-axis length of the ellipse; b is a minor semi-axis length of the ellipse; and $a$ and b are determined by the variance between the lens refractive index and the medium refractive index.

In some embodiments, the conditions satisfied when the curve 130 is the ellipse may be set according to actual conditions such as process requirements; and the conditions may be different from the above formula, as long as the ellipse shape of the curve 130 on the lens curved-surface 110 can be flexibly determined according to the characteristics of the lens 100 in the aspect of display to facilitate the improvement of display effect.

In some embodiments, $a$ and b may satisfy the following condition:

$$\frac{a}{b} = \frac{\sqrt{n_l^2 - n_m^2}}{n_l}$$

wherein $n_l$ is the lens refractive index; and $n_m$ is the medium refractive index.

In some embodiments, the conditions satisfied by $a$ and $b$ may be set according to actual conditions such as process requirements; and the conditions may be different from the above formula, as long as the ellipse shape of the curve 130 on the lens curved-surface 110 can be flexibly determined according to the characteristics of the lens 100 in the aspect of display to facilitate the improvement of display effect.

In some embodiments, the following condition may be satisfied: $n_l > n_m$.

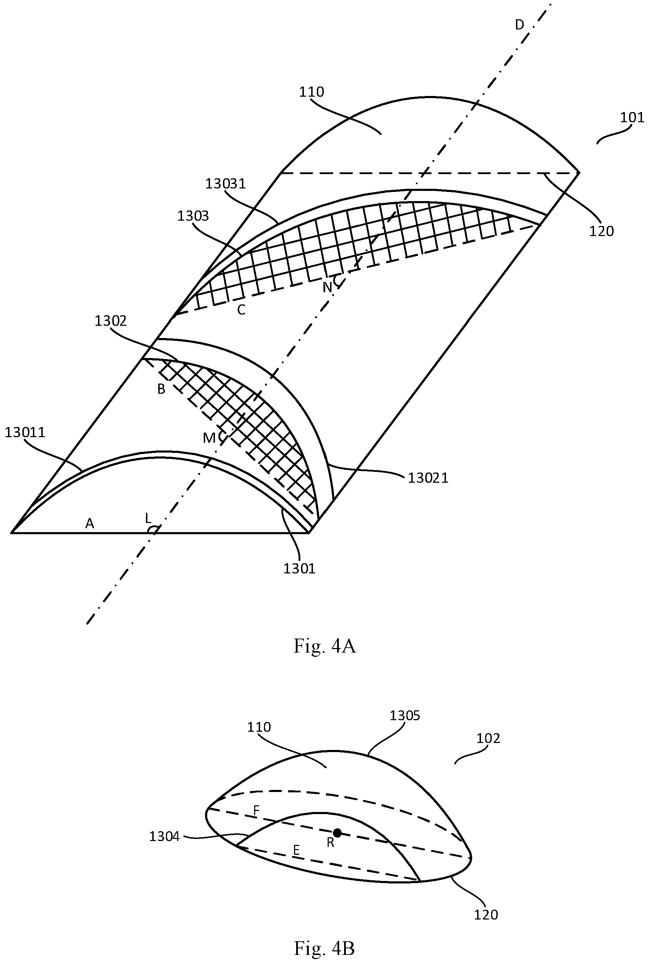

Referring to Figs. 4A and 4B, in some embodiments, the lens 100 may be a lenticular lens 101 or a spherical lens 102.

In some embodiments, as shown in Fig. 4A, when the lens 100 is a lenticular lens 101, the lens curved lens 110 can form different curves 1301, 1302 and 1303 with different directivities on different cross sections of the lenticular lens 101; and longitudinal projection lines of the different curves on the lens bottom surface 120 can form the same or different angles with an axial line D of the lenticular lens 101.

In some embodiments, the lens curved-surface 110 may form a curve 1301 on the cross section of the lens 100. In combination with the relevant descriptions, the curve 1301 has a shape determined based on the lens refractive index of the lenticular lens 101. Optionally, an angle L formed between a longitudinal projection line A of the curve 1301 on the lens bottom surface 120 and the axial line D of the lenticular lens 101 may be a right angle. Optionally, part or all of the other curves (e.g., a curve 13011) parallel to the curve 1301 on the lens curved-surface 110 may have the same shape as the curve 1301.

In some embodiments, the lens curved-surface 110 may form a curve 1302 on the cross section of the lens 100. In combination with the relevant descriptions, the curve 1302 has a shape determined based on the lens refractive index of the lenticular lens 101. Optionally, an angle M formed between a longitudinal projection line B of the curve 1302 on the lens bottom surface 120 and the axial line D of the lenticular lens 101 may be an obtuse angle. Optionally, part or all of the other curves (e.g., a curve 13021) parallel to the curve 1302 on the lens curved-surface 110 may have the same shape as the curve 1302.

In some embodiments, the lens curved-surface 110 may form a curve 1303 on the cross section of the lens 100. In combination with the relevant descriptions, the curve 1303 has a shape determined based on the lens refractive index of the lenticular lens 101. Optionally, an angle N formed between a longitudinal projection line C of the curve 1303 on the lens bottom surface 120 and the axial line D of the lenticular lens 101 may be an obtuse angle. Optionally, part or all of the other curves (e.g., a curve 13031) parallel to the curve 1303 on the lens curved-surface 110 may have the same shape as the curve 1303.

In some embodiments, as shown in Fig. 4B, when the lens 100 is a spherical lens 102, the lens curved-surface 110 may form different curves 1304 and 1305 on different cross sections (not shown in Fig. 4B to avoid confusion of accompanying drawings, and the cross sections in Fig. 4B are similar to those in Fig. 4A) of the spherical lens 102, and longitudinal projection lines of the different curves on the lens bottom surface 120 may or may not pass through a circle center R of the lens bottom surface 120 of the spherical lens 102.

In some embodiments, the lens curved-surface 110 may form a curve 1304 on the cross section of the spherical lens 102. In combination with the above descriptions, the curve 1304 has a shape determined based on the lens refractive index of the spherical lens 102. Optionally, a longitudinal projection line E of the curve 1304 on the lens bottom surface 120 does not pass through the circle center R of the lens bottom surface 120 of the spherical lens 102. Optionally, part or all of the other curves (not shown in Fig. 4B to avoid the confusion of the accompanying drawings, and the other curves parallel to the curve 1304 in Fig. 4B are expressed in a similar way as in Fig. 4A) parallel to the curve 1304 on the lens curved-surface 110 may have the same shape as the curve 1304.

In some embodiments, the lens curved-surface 110 may form a curve 1305 on the cross section of the spherical lens 102. In combination with the above descriptions, the curve 1305 has a shape determined based on the lens refractive index of the spherical lens 102. Optionally, a longitudinal projection line F of the curve 1305 on the lens bottom surface 120 passes through the circle center R of the lens bottom surface 120 of the spherical lens 102. Optionally, part or all of the other curves (not shown in Fig. 4B to avoid the confusion of the accompanying drawings, and the other curves parallel to the curve 1305 in Fig. 4B are expressed in a similar way as in Fig. 4A) parallel to the curve 1305 on the lens curved-surface 110 may have the same shape as the curve 1305.

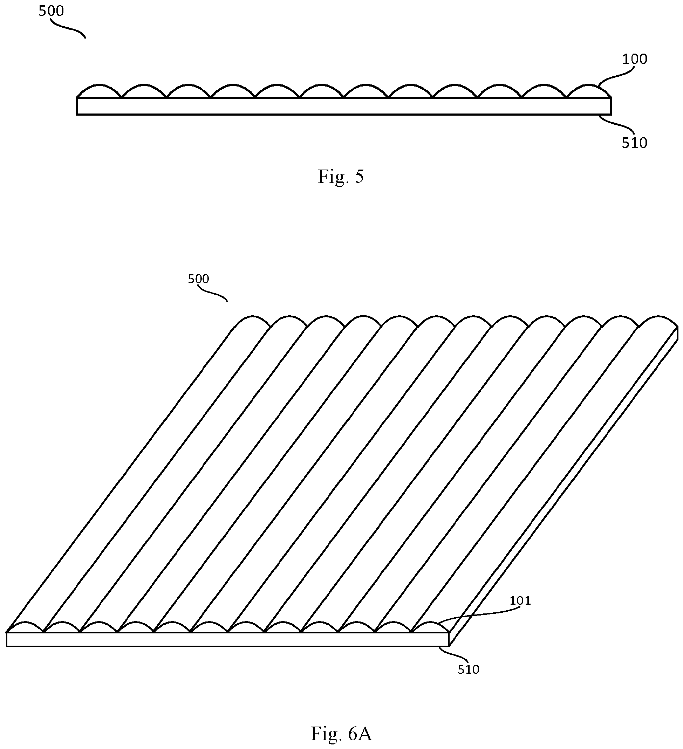

Referring to Fig. 5, embodiments of the present disclosure provide a grating 500, comprising the lens 100, and further comprising a substrate 510 for bearing the lens 100.

In some embodiments, a plurality of lenses 100 may be arranged on the substrate 510 for bearing the lenses 100 when the grating 500 is manufactured.

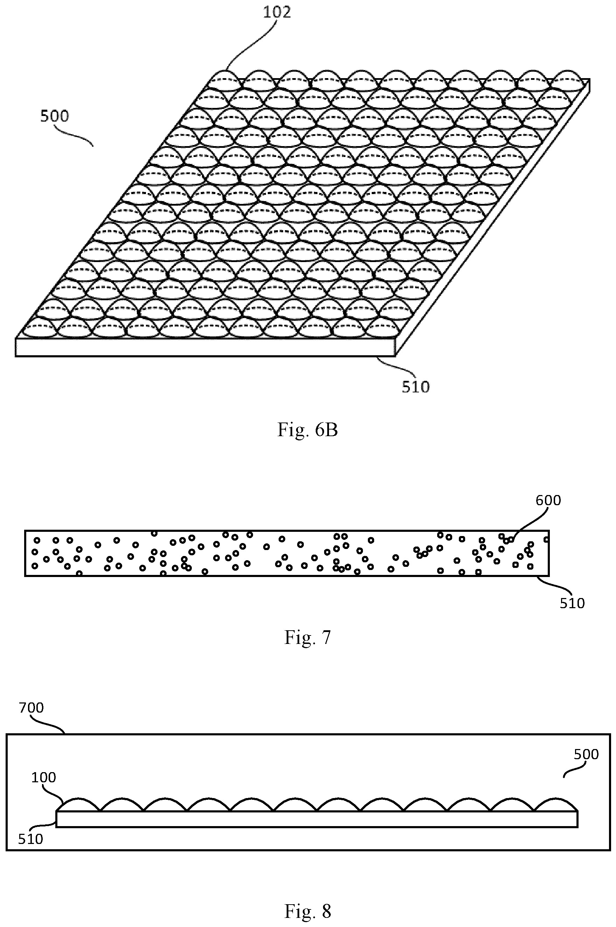

Referring to Figs. 6A and 6B, in some embodiments, part or all of the plurality of lenses 100 may be in array arrangement.

In some embodiments, as shown in Fig. 6A, when the lens 100 is a lenticular lens 101, all of the plurality of lenticular lenses 101 may be in array arrangement, such as parallel arrangement. Optionally, part of the plurality of lenticular lenses 101 may be in array arrangement, such as parallel arrangement. Optionally, any two lenticular lenses 101 may be in vertical arrangement such as vertical arrangement. Optionally, any two lenticular lenses 101 may be in contact with each other, or may be spaced.

In some embodiments, as shown in Fig. 6B, when the lens 100 is a spherical lens 102, all of the plurality of spherical lenses 102 may be in array arrangement, such as determinant arrangement. Optionally, part of the plurality of spherical lenses 102 may be in array arrangement, such as determinant arrangement. Optionally, part or all of the plurality of spherical lenses 102 may be arranged in other arrangement modes in other array shapes, such as circular, elliptical, triangular and other array arrangement modes. Optionally, any two spherical lenses 102 may be in contact with each other, or may be spaced.

In some embodiments, as shown in Fig. 6B, a region surrounded by the plurality of spherical lenses 102 may not be covered by the spherical lenses 102. Optionally, a light-shielding structure may be arranged in the region to completely or partially cover the region; for example, a light-shielding structure including at least one of a light-reflecting material and a light-absorbing material is arranged in the region to completely or partially cover the region. Optionally, at least one of the plurality of spherical lenses 102 surrounding the region may cover the region; for example, at least one of the plurality of spherical lenses 102 surrounding the region completely or partially covers the region.

In some embodiments, one spherical lens 102 of the plurality of spherical lenses 102 surrounding the region may be provided with an extension part, wherein the extension part may extend to the region to partially or completely cover the region; optionally, at least two spherical lenses 102 of the plurality of spherical lenses 102 surrounding the region may be respectively provided with extension parts, wherein the extension part of each spherical lens 102 of the at least two spherical lenses 102 may extend to the region to partially cover the region, so that the extension parts of the at least two spherical lenses 102 may partially or completely cover the region.

In some embodiments, the array arrangement modes of the plurality of lenses 100 may be set according to actual conditions such as process requirements.

In some embodiments, the plurality of lenses 100 and the substrate 510 may be relatively independent structures; for example, the plurality of lenses 100 as independent structures may be arranged on the substrate 510. Optionally, the plurality of lenses 100 and the substrate 510 may be integrally formed; for example, the plurality of lenses 100 may be formed on the substrate 510, so that the plurality of lenses 100 and the substrate 510 are integrally formed. Optionally, the plurality of lenses 100 may be formed on the substrate 510 by imprinting (e.g., nano-imprinting) and other modes, so that the lenses 100 and the substrate 510 are integrally formed.

Referring to Fig. 7, in some embodiments, the substrate 510 may include a light-transmissive material 600, so that the substrate 510 may transmit light.

Referring to Fig. 8, embodiments of the present disclosure provides a display panel 700, including the above grating 500.

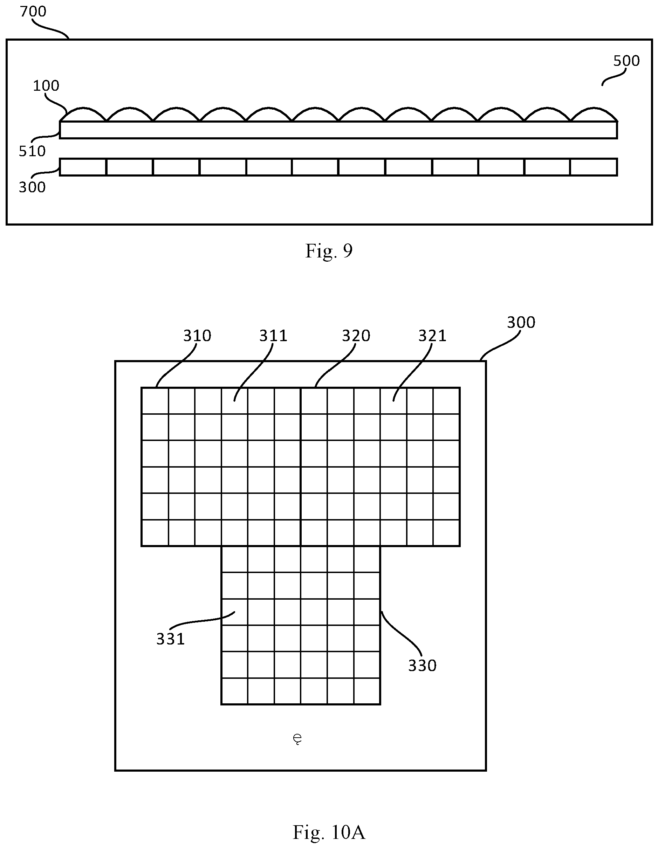

Referring to Fig. 9, in some embodiments, the display panel 700 may further comprise a pixel 300 for displaying.

In some embodiments, as shown in Fig. 9, the display panel 700 comprises a plurality of pixels 300. Optionally, the plurality of pixels 300 may be arranged on a light incident surface of the grating 500.

In some embodiments, the pixel may comprise a plurality of composite subpixels; and each composite subpixel of the plurality of composite subpixels may comprise a plurality of subpixels.

In some embodiments, as shown in Fig. 10A, the pixel 300 may comprise a plurality of composite subpixels such as composite subpixels 310, 320 and 330. Optionally, the composite subpixel 310 may comprise a plurality of subpixels 311; the composite subpixel 320 may comprise a plurality of subpixels 321; and the composite subpixel 330 may comprise a plurality of subpixels 331.

In some embodiments, the plurality of pixels 300 may be in array arrangement. Optionally, the plurality of composite subpixels 310, 320 and 330 may be in array arrangement. Optionally, the plurality of subpixels 311, 321 and 331 may be in array arrangement.

In some embodiments, the array arrangement mode, such as determinant, triangular, circular and other arrangement modes, of at least one of pixels, composite subpixels and subpixels may be considered according to actual conditions such as process requirements.

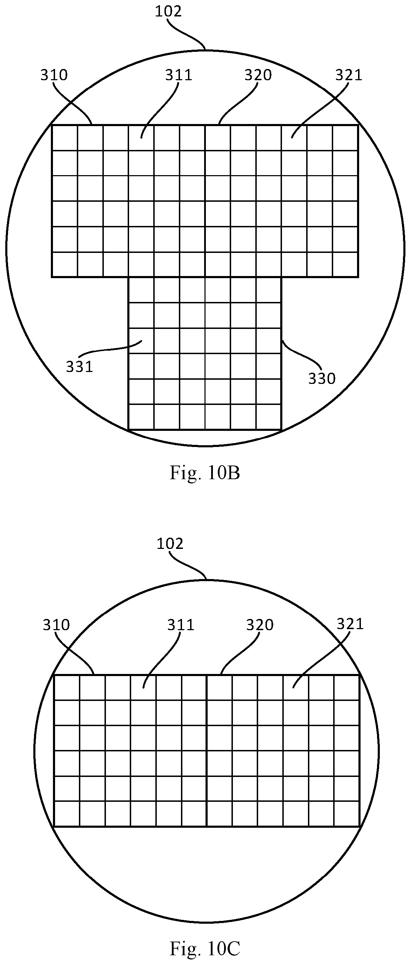

Referring to Figs. 10B and 10C, in some embodiments, the grating 500 may comprise a plurality of spherical lenses 102 serving as the lenses 100; and at least one spherical lens 102 of the plurality of spherical lenses 102 may cover at least one composite subpixel of the same color.

In some embodiments, at least one spherical lens 102 of the plurality of spherical lenses 102 may cover more than one composite subpixel of the same color, such as two, three or more composite subpixels of the same color. Optionally, as shown in Fig. 10B, one spherical lens 102 may cover three composite subpixels 310, 320 and 330 of the same color. Optionally, as shown in Fig. 10C, one spherical lens 102 may cover two composite subpixels 310 and 320 of the same color.

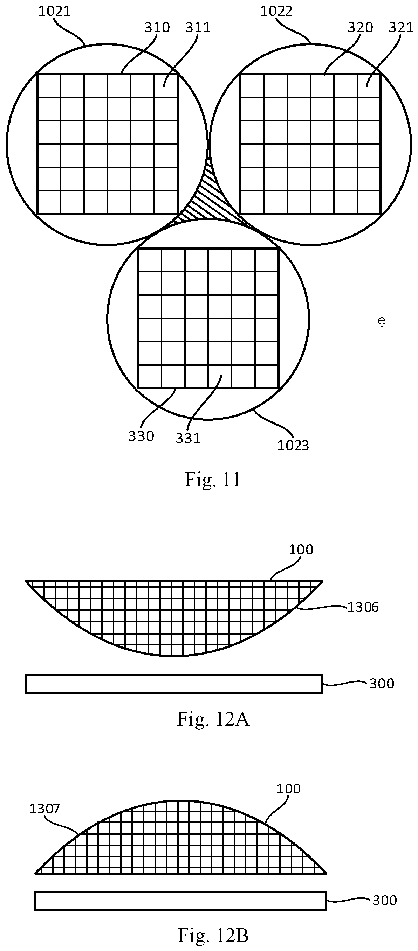

Referring to Fig. 11, in some embodiments, each spherical lens in the plurality of spherical lenses 1021, 1022 and 1023 may respectively cover a composite subpixel of the same color. Optionally, the spherical lens 1021 may cover the composite subpixel 310; and the composite subpixel 310 may comprise a plurality of subpixels 311 of the same color. Optionally, the spherical lens 1022 may cover the composite subpixel 320; and the composite subpixel 320 may comprise a plurality of subpixels 321 of the same color. Optionally, the spherical lens 1023 may cover the composite subpixel 330; and the composite subpixel 330 may comprise a plurality of subpixels 331 of the same color.

In some embodiments, as shown in Fig. 11, a region surrounded by the three spherical lenses 1021, 1022 and 1023 (shown as a diagonal region in the figure) may not be covered by the spherical lenses 1021, 1022 and 1023. Optionally, a light-shielding structure may be arranged in the region to completely or partially cover the region; for example, a light-shielding structure including at least one of a light-reflecting material and a light-absorbing material is arranged in the region to completely or partially cover the region. Optionally, at least one of the three spherical lenses 1021, 1022 and 1023 surrounding the region may completely or partially cover the region; for example, at least one of the three spherical lenses 1021, 1022 and 1023 surrounding the region may completely or partially cover the region.

In some embodiments, one of the three spherical lenses 1021, 1022 and 1023 surrounding the region may be provided with an extension part, wherein the extension part may extend to the region to partially or completely cover the region; for example, the spherical lens 1021 may be provided with an extension part, wherein the extension part may extend to the region to partially or completely cover the region. Optionally, at least two spherical lenses in the plurality of spherical lenses surrounding the region may be respectively provided with extension parts, wherein the extension part of each of the at least two spherical lenses may extend to the region to partially cover the region, so that the extension parts of the at least two spherical lenses may partially or completely cover the region; for example, the spherical lenses 1021, 1022 and 1023 may be respectively provided with extension parts, wherein the extension part of each of the spherical lenses 1021, 1022 and 1023 may extend to the region to partially cover the region, so that the extension parts of the spherical lenses 1021, 1022 and 1023 may partially or completely cover the region.

In some embodiments, all or part of a composite subpixel may be covered by the same spherical lens 102. Optionally, the number of composite subpixels covered by the spherical lens 102 may be considered according to actual conditions such as process requirements. Optionally, the composite subpixels covered by the same spherical lens 102 may have the same color or different colors; for example, a composite subpixel covered by the same spherical lens 102 comprises subpixels of the same color or different colors; or, part or all of more than two composite subpixels covered by the same spherical lens 102 have different colors.

Referring to Fig. 12A, in some embodiments, when a curve 1306 of the lens curved-surface 110 (not shown in the figure, referring to Figs. 1A and 2 to 4B) formed on the cross section of the lens 100 is the hyperbola, the lens curved-surface 110 may face the pixel 300. Referring to Fig. 12B, in some embodiments, when a curve 1307 of the lens curved-surface 110 (not shown in the figure, referring to Figs. 1A and 2 to 4B) formed on the cross section of the lens 100 is the ellipse, the lens curved-surface 110 may face away from the pixel 300. Optionally, an orientation relationship between the lens curved-surface 110 and the pixels 300 may be considered according to actual conditions such as process requirements.

In some embodiments, the pixel 300 may be a pixel for 3D display. Optionally, the pixel 300 may be set according to actual conditions such as process requirements, so that the pixel 300 may provide support in the aspect of display, for example, providing support for 2D display, 3D display and the like.

In some embodiments, the display panel 700 may realize 2D or 3D display. Optionally, all or part of the display panel 700 may realize 2D or 3D display; for example, all of the display panel 700 may realize 2D or 3D display; or, part of the display panel 700 may realize 2D or 3D display.

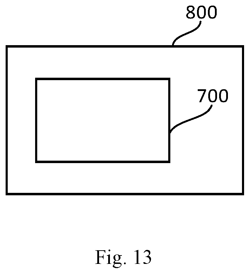

Referring to Fig. 13, embodiments of the present disclosure further provide a display 800, comprising the display panel 700.

In some embodiments, the display 800 may further comprise other components for supporting normal operation of the display 800, such as at least one of a communication interface, a framework, a control circuit and the like.

In some embodiments, whether the lens 100 comprises the lenticular lens 101 or the spherical lens 102 or has other shapes, at least one curve of a surface of the lens 100 macroscopically may be of a circular or noncircular shape, such as ellipse, hyperbola, parabola and other shapes. Optionally, at least one curve of the surface of the lens 100 microscopically may be of a noncircular shape, such as polygon and other noncircular shapes. Optionally, the shape of the lens 100 may be determined according to actual conditions such as process requirements, for example, the shape of the surface of the lens 100.

By adopting the lens, the grating, the display panel and the display provided by embodiments of the present disclosure, the shape of the lens curved-surface can be flexibly determined according to characteristics of the lens in the aspect of display, so that the shape of the lens curved-surface is no longer fixed and single, and is related to the characteristics of the lens in the aspect of display, thereby contributing to the improvement of display effect.

The above description and drawings sufficiently illustrate the embodiments of the present disclosure to enable those skilled in the art to practice them. Other embodiments may comprise structural, logical, electrical, process, and other changes. The embodiments represent only possible changes. Unless expressly required, individual components and functions are optional and the order of operations may be changed. Parts and features of some embodiments may be included in or substituted for parts and features of other embodiments. The scope of the disclosed embodiments includes the full scope of the claims, and all available equivalents of the claims. When used in the present application, although the terms of "first", "second", etc. may be possibly used in the present application to describe various elements, these elements should not be limited by these terms. These terms are only used to distinguish one element from another. For example, without changing the meaning of the description, a first element may be called as a second element, and similarly, the second element may be called as the first element, as long as all of "the first elements" that appear are consistently renamed and all of "the second elements" that appear are consistently renamed. The first element and the second element are both elements, but may not be the same element. Moreover, the terms used in the present application are used to describe the embodiments only and not to limit the claims. As used in the illustration of the embodiments and the claims, unless clearly indicated in the context, the singular forms "a", "an" and "the" are also intended to include the plural forms. Similarly, the term "and/or" as used in the present application is meant to include any and all possible combinations of one or more of the associated listings. In addition, when used in the present application, the term "comprise" and its variations "comprises" and/or "comprising", etc., refer to the presence of stated features, integers, steps, operations, elements, and/or components, but does not preclude the presence or addition of one or more other features, integers, steps, operations, elements, components and/or groupings of these. Without further limitations, an element limited by the phrase "comprises a..." does not preclude the presence of additional identical elements in the process, method or device that includes the element. Herein, the difference of each embodiment from each other may be the focus of explanation. The same and similar parts among all of the embodiments may be referred to each other. For the method and product disclosed by the embodiments, if the method and product correspond to a method part disclosed by the embodiments, the description of the method part can be referred to for the related part.

Those skilled in the art may recognize that the units and algorithm steps of each example described in conjunction with the embodiments disclosed herein can be implemented in electronic hardware, or a combination of computer software and electronic hardware. Whether these functions are performed in hardware or software may depend on the specific application and design constraints of the technical solution. Those skilled in the art may use different methods for implementing the described functions for each particular application, but such implementations should not be considered beyond the scope of the embodiments of the present disclosure. Those skilled in the art may clearly understand that, for the convenience and brevity of description, the corresponding processes in the above method embodiments may be referred to for the working processes of the above systems, devices and units, which will not be repeated here.

In the embodiments disclosed herein, the disclosed method and product (including, but not limited to the apparatus and the device) may be realized in other ways. For example, the device embodiments described above are merely schematic. For example, the division of the units may be only a logical functional division, and may be an additional division manner in actual realization. For example, multiple units or components may be combined or integrated into another system, or some features may be ignored or not executed. In addition, the displayed or discussed mutual coupling or direct coupling or communication connection may be indirect coupling or communication connection through some interfaces, devices or units, and may be electrical, mechanical or other forms. The units described as separate components may or may not be physically separated, and the components shown as the units may or may not be physical units, that is, may be located in one place, or may be distributed on multiple network units. The present embodiments may be implemented by selecting some or all of the units according to actual needs. In addition, each functional unit in the embodiments of the present disclosure may be integrated into one processing unit, or each unit may exist physically alone, or two or more units may be integrated into one unit.

**Claims**

1. A lens, having a lens curved-surface in a shape of non-circular-arc,
   wherein a curve of the lens curved-surface formed on a cross section of the lens has a shape determined based on a lens refractive index of the lens.

2. The lens according to claim 1, wherein a shape of the curve is determined based on a variance between the lens refractive index and a medium refractive index;
   wherein the medium refractive index is a refractive index of a medium located outside the lens.

3. The lens according to claim 2, wherein the medium refractive index is a refractive index of a medium between the lens and a pixel for display.

4. The lens according to any one of claims 1-3, wherein the curve is a hyperbola, ellipse or parabola.

5. The lens according to claim 4, wherein the curve is a hyperbola, satisfying following conditions:

$$\frac{y^2}{b^2} - \frac{x^2}{a^2} = 1; \qquad a > 0, b > 0$$

wherein x is a coordinate of a point on the hyperbola on an X axis; y is a coordinate of a point on the hyperbola on a Y axis; $a$ is a real semi-axis length of the hyperbola; b is an imaginary semi-axis length of the hyperbola; and $a$ and b are determined by a variance between the lens refractive index and a medium refractive index.

6. The lens according to claim 5, wherein the $a$ and $b$ satisfy a following condition:

$$\frac{a}{b} = \frac{\sqrt{n_l^2 - n_m^2}}{n_m}$$

wherein $n_l$ is the lens refractive index; and $n_m$ is the medium refractive index.

7. The lens according to claim 4, wherein the curve is an ellipse, satisfying following conditions:

$$\frac{x^2}{a^2} + \frac{y^2}{b^2} = 1; \qquad a > b > 0$$

wherein x is a coordinate of a point on the ellipse on an X axis; y is a coordinate of a point on the ellipse on a Y axis; $a$ is a major semi-axis length of the ellipse; b is a minor semi-axis length of the ellipse; and $a$ and b are determined by a variance between the lens refractive index and a medium refractive index.

8. The lens according to claim 7, wherein the $a$ and $b$ satisfy a following condition:

$$\frac{a}{b} = \frac{\sqrt{n_l^2 - n_m^2}}{n_l}$$

wherein $n_l$ is the lens refractive index; and $n_m$ is the medium refractive index.

9. The lens according to claim 6 or 8, wherein $n_l > n_m$.

**10.** The lens according to claim 1, wherein the lens is a lenticular lens or a spherical lens.

**11.** A grating, comprising a plurality of lenses of any one of claims 1-10, and further comprising a substrate for bearing the lenses.

**12.** The grating according to claim 11, wherein part or all of the plurality of lenses are in array arrangement.

**13.** The grating according to claim 11 or 12, wherein

the plurality of lenses and the substrate are relatively independent structures; or
the plurality of lenses and the substrate are integrally formed.

**14.** The grating according to claim 11, wherein the substrate comprises a light-transmissive material.

**15.** A display panel, comprising the grating of any one of claims 11-14.

**16.** The display panel according to claim 15, further comprising a pixel for display.

**17.** The display panel according to claim 16, wherein

the pixel comprises a plurality of composite subpixels; and each composite subpixel of the plurality of composite subpixels comprises a plurality of subpixels;
the grating comprises a plurality of spherical lenses serving as lenses; and at least one spherical lens of the plurality of spherical lenses covers at least one composite subpixel in a same color.

**18.** The display panel according to claim 17, wherein each spherical lens in the plurality of spherical lenses respectively covers a composite subpixel in a same color.

**19.** The display panel according to claim 16, wherein

when a curve of the lens curved-surface formed on a cross section of the lens is a hyperbola, the lens curved-surface faces the pixel; or
when a curve of the lens curved-surface formed on a cross section of the lens is an ellipse, the lens curved-surface faces away from the pixel.

**20.** The display panel according to any one of claims 16-19, wherein the pixel is a pixel for 3D display.

**21.** A display, comprising the display panel of any one of claims 15-20.

100

110

A ⊗                                    ⊗ A

120

100

130

120

A-A

Fig. 1A

130

Y

100

X                    Z

120

A-A

Fig. 1B

Fig. 2

Fig. 3

Fig. 4A

Fig. 4B

500

100

510

Fig. 5

500

101

510

Fig. 6A

Fig. 6B

Fig. 7

Fig. 8

Fig. 9

Fig. 10A

Fig. 10B

Fig. 10C

Fig. 11

Fig. 12A

Fig. 12B

800

700

Fig. 13

## INTERNATIONAL SEARCH REPORT

| | International application No. |
|---|---|
| | **PCT/CN2021/089532** |

**A. CLASSIFICATION OF SUBJECT MATTER**

G02B 27/00(2006.01)i

According to International Patent Classification (IPC) or to both national classification and IPC

**B. FIELDS SEARCHED**

Minimum documentation searched (classification system followed by classification symbols)

G02B, F21V

Documentation searched other than minimum documentation to the extent that such documents are included in the fields searched

Electronic data base consulted during the international search (name of data base and, where practicable, search terms used)

CNPAT, CNKI, WPI, EPODOC: 透镜, 曲面, 曲线, 面型, 面形, 形状, 折射率, 折射力, 方差, 不同, 差异, 差别, 差, 双曲线, 双曲面, 椭圆, 抛物线, 抛物面, lens, curv+, surface, refract+, differ+, hyperbol+, para curve, parabol+, oval, variance

**C. DOCUMENTS CONSIDERED TO BE RELEVANT**

| Category* | Citation of document, with indication, where appropriate, of the relevant passages | Relevant to claim No. |
|---|---|---|
| PX | CN 212229354 U (BEIJING IVISUAL 3D TECHNOLOGY CO., LTD. et al.) 25 December 2020 (2020-12-25) claims 1-21 | 1-21 |
| X | CN 102338345 A (ENTIRE TECHNOLOGY CO., LTD.) 01 February 2012 (2012-02-01) description paragraphs 0076-0096, 0116, 0121-0122, figures 1-3, 6A-6C, 8 | 1-5, 10-15, 21 |
| Y | CN 102338345 A (ENTIRE TECHNOLOGY CO., LTD.) 01 February 2012 (2012-02-01) description paragraphs 0076-0096, 0116, 0121-0122, figures 1-3, 6A-6C, 8 | 4, 7, 16-20 |
| Y | CN 105445833 A (WANWEI YUNSHI (SHANGHAI) DIGITAL TECHNOLOGY CO., LTD.) 30 March 2016 (2016-03-30) description paragraph 0052, figures 1-9 | 4, 7, 16-20 |
| X | CN 105652454 A (YTDIAMOND CO., LTD.) 08 June 2016 (2016-06-08) description, paragraphs 0018-0068, and figures 1-4 | 1-3, 10-15, 21 |
| X | CN 101203965 A (KONINKL PHILIPS ELECTRONICS NV.) 18 June 2008 (2008-06-18) description page 8 lines 11-27, figure 3 | 1-3 |
| A | US 2002085287 A1 (COMOC CORPORATION) 04 July 2002 (2002-07-04) entire document | 1-21 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 July 2021** | **22 July 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/089532**

**C.    DOCUMENTS CONSIDERED TO BE RELEVANT**

| Category* | Citation of document, with indication, where appropriate, of the relevant passages | Relevant to claim No. |
|---|---|---|
| A | US 2002039157 A1 (SHARP K. K.) 04 April 2002 (2002-04-04)<br>entire document | 1-21 |

Form PCT/ISA/210 (second sheet) (January 2015)

**INTERNATIONAL SEARCH REPORT**
**Information on patent family members**

International application No.

**PCT/CN2021/089532**

| Patent document cited in search report | | | Publication date (day/month/year) | Patent family member(s) | | | Publication date (day/month/year) |
|---|---|---|---|---|---|---|---|
| CN | 212229354 | U | 25 December 2020 | None | | | |
| CN | 102338345 | A | 01 February 2012 | CN | 102338345 | B | 16 October 2013 |
| CN | 105445833 | A | 30 March 2016 | None | | | |
| CN | 105652454 | A | 08 June 2016 | CN | 105652454 | B | 13 November 2018 |
| CN | 101203965 | A | 18 June 2008 | EP | 1897150 | A2 | 12 March 2008 |
| | | | | TW | 200705722 | A | 01 February 2007 |
| | | | | US | 2010271828 | A1 | 28 October 2010 |
| | | | | CN | 101203965 | B | 21 April 2010 |
| | | | | JP | 2008547168 | A | 25 December 2008 |
| | | | | KR | 20080030038 | A | 03 April 2008 |
| | | | | WO | 2006136965 | A2 | 28 December 2006 |
| US | 2002085287 | A1 | 04 July 2002 | AU | 6182200 | A | 19 February 2001 |
| | | | | WO | 0109869 | A1 | 08 February 2001 |
| | | | | JP | 2002107508 | A | 10 April 2002 |
| | | | | JP | 2002048903 | A | 15 February 2002 |
| | | | | JP | 2001042805 | A | 16 February 2002 |
| | | | | JP | 2001242305 | A | 07 September 2010 |
| | | | | JP | 2001133602 | A | 18 May 2010 |
| US | 2002039157 | A1 | 04 April 2002 | JP | 2002182008 | A | 26 June 2002 |
| | | | | US | 6606135 | B2 | 12 August 2003 |
| | | | | JP | 2008097032 | A | 24 April 2008 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010439819